(19) Europäisches Patentamt
European Patent Office
Office européen des brevets

(11) **EP 2 536 615 B1**

(12) **EUROPÄISCHE PATENTSCHRIFT**

(45) Veröffentlichungstag und Bekanntmachung des Hinweises auf die Patenterteilung:
**08.11.2017 Patentblatt 2017/45**

(51) Int Cl.:
***B62D 15/02*** *(2006.01)* ***B60W 30/08*** *(2012.01)*

(21) Anmeldenummer: **11704945.2**

(22) Anmeldetag: **28.01.2011**

(86) Internationale Anmeldenummer:
**PCT/EP2011/051251**

(87) Internationale Veröffentlichungsnummer:
**WO 2011/101223 (25.08.2011 Gazette 2011/34)**

(54) **VERFAHREN ZUR UNTERSTÜTZUNG EINES FAHRERS EINES FAHRZEUGS BEI EINEM FAHRMANÖVER**

METHOD FOR ASSISTING A DRIVER OF A VEHICLE DURING A DRIVING MANEUVER

PROCÉDÉ D'ASSISTANCE AU CONDUCTEUR D'UN VÉHICULE À MOTEUR LORS D'UNE MANOEUVRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.02.2010 DE 102010002105**

(43) Veröffentlichungstag der Anmeldung:
**26.12.2012 Patentblatt 2012/52**

(73) Patentinhaber: **Robert Bosch GmbH
70442 Stuttgart (DE)**

(72) Erfinder:
• **BELSER, Florian
72379 Hechingen (DE)**
• **SCHERL, Michael
74321 Bietigheim (DE)**
• **KNOOP, Steffen
75223 Niefern-Oeschelbronn (DE)**

(56) Entgegenhaltungen:
EP-A1- 1 864 881    DE-A1- 10 331 235
DE-A1-102005 027 165    US-A1- 2009 014 227

EP 2 536 615 B1

## Beschreibung

Stand der Technik

Die Erfindung geht aus von einem Verfahren zur Unterstützung eines Fahrers eines Fahrzeugs bei einem Fahrmanöver gemäß dem Oberbegriff des Anspruchs 1.

Aus dem Stand der Technik bekannte Verfahren zur Unterstützung eines Fahrers bei einem Fahrmanöver sind insbesondere solche, die den Fahrer z.B. beim Einparken unterstützen. Zur Durchführung der Verfahren werden im Allgemeinen so genannte Fahrassistenzsysteme eingesetzt, die entweder automatisch bei Unterschreiten einer vorgegebenen Geschwindigkeit starten oder manuell vom Fahrer aktiviert werden. Systeme, die den Fahrer bei Einparkmanövern unterstützen, sind solche, die die Umgebung des Fahrzeugs erfassen und den Fahrer über Annäherung an Objekte informieren. Die Information des Fahrers kann dabei z.B. optisch und/oder akustisch erfolgen. Weiterhin sind auch Systeme bekannt, bei denen zunächst die Umgebung des Fahrzeugs erfasst wird und anschließend eine mögliche Trajektorie zum Einparken in eine erkannte Parklücke berechnet wird. Zum Befahren der Trajektorie ist einerseits bekannt, dem Fahrer notwendige Anweisungen bezüglich Längsführung und Querführung des Fahrzeugs zu geben oder alternativ auch selbsttätig entweder die Lenkung des Fahrzeugs oder auch Lenkung und Längsführung des Fahrzeugs zu übernehmen.

So zeigt beispeilsweise die DE 103 31 235 A ein System zur Unterstützung eines Einparkvorgangs. Dabei wird zunächst das Umfeld des Fahrzeugs erfasst und ein Parkplatz erkannt. Das System berechnet einen für den Parkvorgang möglichen Fahrbereich zwischen zwei Trajektorien. Bei dieser Berechnung wird die Fahrzeugaußenkontur berücksichtigt. Wird dieser Fahrbereich verlassen, gibt das System dem Fahrer eine entsprechende Rückmeldung wodurch dem Fahrer die Notwendigkeit eines Eingriffs signalisiert wird. Ein automatischer Lenk- oder Bremseingriff ist nicht beschrieben. Aus der EP 1 864 881 A1 ist ein Verfahren zum automatischen Einparken bekannt. Dabei wird das Fahrzeug entlang einer berechneten Trajektorie automatisch in eine zuvor erfasste Parklücke gesteuert. Wird während der Fahrt ein Hindernis erkannt und eine mögliche Kollision festgestellt zu erfolgt ein automatischer Lenk- oder Bremseingriff um die Kollision zu vermeiden.

Neben Systemen, die den Fahrer beim Einparken des Fahrzeugs unterstützen, sind auch Systeme bekannt, die unterstützend eingreifen, um eine Kollision mit einem Objekt zu vermeiden. Ein solches System ist z.B. in DE-A 10 2006 057 842 beschrieben. Um den Fahrer bei der Querführung des Fahrzeugs zu unterstützen, wird die Umgebung des Fahrzeugs erfasst, um Objekte in der Umgebung des Fahrzeugs und/oder den Verlauf einer vom Fahrzeug befahrenen Fahrspur zu erkennen. Es wird ein Querführungssystemeingriff zur Erzeugung eines kurskorrigierenden Systemgiermoments oder einer kurskorrigierenden Systemgierrate ausgelöst, wenn die Gefahr besteht, dass das Fahrzeug mit einem der erkannten Objekte kollidieren könnte oder die erkannte Fahrspur verlassen könnte. Durch eine Betätigung des Lenkrads des Fahrzeugs, des Fahrpedals des Fahrzeugs und/oder Bremspedals des Fahrzeugs kann der Querführungssystemeingriff unterbrochen werden, wenn das Ausmaß der jeweiligen Betätigung von einem der jeweiligen Betätigung zugeordneten Betätigungsreferenzwert betragsmäßig um mehr als ein vorgegebenes Toleranzmaß abweicht.

Nachteil des in DE-A 10 2006 057 842 beschriebenen Verfahrens ist, dass insbesondere bei Fahrmanövern, die mit geringer Geschwindigkeit durchgeführt werden, eine enge Vorbeifahrt an einem Objekt nicht möglich ist, da die Kontur der Karosserie des Fahrzeugs nicht berücksichtigt wird.

Offenbarung der Erfindung

Vorteile der Erfindung

Beim erfindungsgemäßen Verfahren zur Unterstützung eines Fahrers eines Fahrzeugs bei einem Fahrmanöver, bei dem zumindest die Umgebung des Fahrzeugs in Fahrtrichtung vor dem Fahrzeug erfasst wird, um Objekte zu erfassen, mit denen das Fahrzeug unter Beibehaltung der Fahrtrichtung kollidieren würde, wobei bei einer drohenden Kollision mit einem Objekt ein automatischer Lenkeingriff und/oder ein automatischer Bremseingriff erfolgt, um eine Kollision mit dem Objekt zu vermeiden, wird zur Ermittlung, ob eine Kollision mit einem Objekt droht, die Kontur der Karosserie des Fahrzeugs berücksichtigt.

Bei bekannten Systemen wird das Fahrzeug als eine rechteckige Box angenommen. Dies gilt auch für Einparksysteme, die ihre Trajektorie selbst berechnen und befahren. Bei Fahrmanövern, die der Fahrer durchführt, werden jedoch Einschränkungen, die sich durch die Annahme der Fahrzeugkarosserie als rechteckige Box ergeben, vom Fahrer nicht akzeptiert. Im Allgemeinen nimmt die Breite zur Fahrzeugfront hin ab und Fahrzeugecken sind gegenüber der Spitze des Fahrzeugs zum Teil um bis zu 15 cm zurückgesetzt. Da die Fahrzeugkarosserie bei derzeitigen Systemen als rechteckige Box betrachtet wird, und zurückgesetzte Bereiche somit nicht berücksichtigt werden, wird eine enge Vorbeifahrt, die aufgrund der tatsächlichen Karosserieform nicht zu einer Kollision führen würde, jedoch zu einer Kollision mit einer rechteckig angenommenen Karosserieform, nicht berücksichtigt. Aufgrund der nicht rechteckigen Karosserieform ist daher vielfach eine engere Vorbeifahrt möglich als diese mit derzeitigen Systemen, die die Karosserieform nicht berücksichtigen, erlaubt wird. Da der Fahrer im Allgemeinen die Maße seines Fahrzeugs sehr genau einschätzen kann und daher auch mit einem sehr geringen Abstand an einem Objekt vorbeifahren kann, wird dieser einen teilweise größeren Abstand, der von einem Fahrassistenzsystem vorgegeben wird, nicht akzeptieren und daher das Fahrassistenzsystem nicht nutzen. Durch die Berücksichtigung der Kontur der Karosserie des Fahrzeugs lässt sich somit eine verbesserte Unterstützung des Fahrers bei einem Fahrmanöver realisieren.

Für die Repräsentation der Kontur kann insbesondere eine vereinfachte zweidimensionale Darstellungsform, zum Beispiel ein Polygonzug. Anwendung finden. Dieser wird den Anforderungen entsprechend durch die maximalen Ausmaße der Karosserie und durch kollisionsrelevante Anbauteile bestimmt. Die Kontur kann aber auch ein detaillierteres 3D-Modell umfassen, das die überragenden Bereiche, wie Fahrzeugfront und Heck und die unterschiedlichen Höhen des Fahrzeugs mit berücksichtigt.

In einer bevorzugten Ausführungsform wird das Fahrmanöver bei einer niedrigen Geschwindigkeit durchgeführt. Vorzugsweise ist die Geschwindigkeit, bei der das Fahrmanöver durchgeführt wird, kleiner als 30 Stundenkilometer, insbesondere kleiner als 20 Stundenkilometer. Im Allgemeinen ist eine enge Vorbeifahrt an einem Objekt bei Rangiermanövern oder Einparkvorgängen gewünscht. Diese werden im Allgemeinen bei geringen Geschwindigkeiten durchgeführt, so dass das erfindungsgemäße Verfahren besonders vorteilhaft bei Fahrmanövern durchgeführt wird, die mit niedriger Geschwindigkeit durchgeführt werden.

Um ein Objekt zu erkennen, ist es notwendig, die Umgebung des Fahrzeugs zu erfassen. Zur Vermeidung von Kollisionen ist es insbesondere vorteilhaft, zumindest die Umgebung des Fahrzeugs in Fahrtrichtung vor dem Fahrzeug zu erfassen. Bei Vorwärtsfahrt des Fahrzeugs bedeutet in Fahrtrichtung vor dem Fahrzeug der Bereich vor dem Fahrzeug, bei einer Rückwärtsfahrt bedeutet in Fahrtrichtung vor dem Fahrzeug der Bereich hinter dem Fahrzeug. Zusätzlich ist es auch möglich, die Bereiche neben dem Fahrzeug zu erfassen. Insbesondere notwendig ist es, den Bereich zu erfassen, der während der Fahrt vom Fahrzeug überstrichen wird. Zur Erfassung der Umgebung des Fahrzeugs werden vorzugsweise Abstandssensoren eingesetzt. Hierbei werden insbesondere Abstandssensoren eingesetzt, die den Nahbereich, d.h. einen Bereich bis ungefähr 15 m vor dem Fahrzeug, abdecken. Geeignete Sensoren, die eingesetzt werden können, sind z.B. Ultraschallsensoren, Radarsensoren oder LIDAR-Sensoren. Neben diesen Sensoren können jedoch z.B. auch kapazitive Sensoren oder Videosensoren, beispielsweise Stereo-Video-Systeme eingesetzt werden.

Um eine Kollision mit einem Objekt, mit dem eine Kollision drohen würde, wenn das Fahrzeug die Fahrtrichtung beibehält, zu vermeiden, wird in einer bevorzugten Ausführungsform zunächst ein automatischer Lenkeingriff durchgeführt. Um den Lenkeingriff durchzuführen, wird zunächst der notwendige Pfad bestimmt, entlang dem gefahren werden muss, um eine Kollision zu vermeiden. Zur Berechnung des Ausweichpfades kann die Reaktionszeit des Fahrers mit eingerechnet werden, die notwendig ist, um eine Kollision zu vermeiden. Sollte der Fahrer nicht reagieren, wird ein automatischer Lenkeingriff durchgeführt, um die Kollision zu vermeiden.

Der Ausweichpfad kann insbesondere eine Krümmung, eine Trajektorie oder andere geometrische Beschreibungsformen umfassen.

In einer bevorzugten Ausführungsform erfolgt ein automatischer Bremseingriff und/oder eine Empfehlung für einen Bremseingriff nur dann, wenn eine Kollision durch den automatischen Lenkeingriff und/oder empfohlenen Lenkeingriff nicht vermieden werden kann. Die für den Bremseingriff notwendige Fahrzeugverzögerung wird durch folgenden Zusammenhang beschrieben:

$$a = \frac{v^2}{2s} \cdot F(d,s) \quad (1)$$

In Gleichung 1 bedeutet a die notwendige Fahrzeugverzögerung, v die Geschwindigkeit des Fahrzeuges, d ist der Abstand eines Objekts von der Mitte des Fahrschlauches zur Fahrzeugkontur entlang der Fahrschlauchkrümmung. Fahrschlauch ist dabei der Bereich, der von der Karosserie bei der Fahrt überstrichen wird.

Bei einer Kurvenfahrt kann die Kollision auch mit der Fahrzeuginnenseite erfolgen. Der Abstand s wird damit zwischen Hindernis und Kollisionsort an der Fahrzeugseite bestimmt. Die Funktion F(d,s) dient als Fensterfunktion und schließt zu frühe Eingriffe aus. Für einen Notbremseingriff kann F(d,s) = 1 für Werte von s > 0 und s - B(v) - D < 0 sein und ansonsten 0. B(v) ist dabei der geschwindigkeitsabhängige Bremsweg und D der Sicherheitsabstand zu einem Hindernis. Der Sicherheitsabstand ist dabei als Wert vorgegeben. Ein üblicher Sicherheitsabstand ist z.B. 10 cm.

Um eine Kollision zu vermeiden, wird in Abhängigkeit von Lenkeinschlag, Geschwindigkeit des Fahrzeugs, Kontur der Karosserie des Fahrzeugs und Position eines Objekts, mit dem eine Kollision droht, eine Ausweichkrümmung berechnet. Aus der Ausweichkrümmung ergibt sich dann der Ausweichpfad, entlang dem das Fahrzeug bewegt werden muss, um die Kollision mit dem Objekt zu vermeiden.

In einer bevorzugten Ausführungsform wird in Abhängigkeit vom Abstand des Fahrzeugs zu dem Objekt und der Geschwindigkeit des Fahrzeugs sowie dem Ausweichpfad ein Lenkmoment gebildet, um dem Fahrer einen zur Vermeidung einer Kollision mit dem Objekt notwendigen Lenkeinschlag anzuzeigen. Durch das aufgebrachte Lenkmoment wird der Fahrer veranlasst, eine Lenkbewegung durchzuführen, die durch das aufgebrachte Moment vorgegeben wird. Das notwendige Lenkmoment M kann z.B. durch folgende Gleichung bestimmt werden:

$$M = p \cdot k \quad (2)$$

In Gleichung 2 bedeutet p einen Proportionalitätsfaktor und k den notwendigen Ausweichpfad zur Vermeidung einer Kollision. Die Bestimmung des Ausweichpfades kann insbesondere durch die Berechnung einer Ausweichkrümmung erfolgen. Diese ist dabei eine Funktion der angenommenen Reaktionszeit des Fahrers, z.B. 0,7 s, der Geschwindigkeit des Fahrzeugs, der Kontur des Fahrzeugs, des Abstandes des Hindernisses von der Fahrschlauchmitte und des Abstandes des nächsten Hindernisses im Fahrschlauch zur Fahrzeugkontur entlang der Fahrschlauchkrümmung. Der Proportionalitätsfaktor p wird vorzugsweise so gewählt, dass das maximal auftretende Lenkmoment durch den Fahrer übersteuert werden kann, bei niedrigen Geschwindigkeiten jedoch auch die Reibungskräfte der Reifen überwunden werden können. Vorteilhafterweise kann der Proportionalitätsfaktor p als von Fahrzeuggrößen abhängige Kennlinie oder Kennfeld gewählt werden.

Grundlage der Bestimmung einer Ausweichkrümmung sind die Koordinaten s und d, die für jeden von der Sensorik erfassten Umfeldpunkt bestimmt werden können. Diese Umfeldpunkte werden aus dem lokalen kartesischen Fahrzeugkoordinatensystem unter Verwendung des Lenkwinkels in ein (s,d) Koordinatensystem überführt. Hierbei fällt d die Bedeutung des Lateralabstandes von der Fahrschlauchmitte zu. Hat d den Wert d=0, so bedeutet dies ein in der Mitte des Fahrschlauchs liegendes Objekt. Für Geradeausfahrt gilt also d = y, mit y als lateraler kartesischer Objektkoordinate. Bei einer Kurvenfahrt sind der Fahrschlauch und dessen Grenzen von der gefahrenen Krümmung sowie der Fahrzeugkontur abhängig. Die Fahrschlauchgrenzen werden durch diejenigen Eckpunkte der Fahrzeugkontur mit der jeweils größten und kleinsten Krümmung festgelegt. Somit verändert sich die Fahrschlauchmitte und beispielsweise deren Schnittpunkt mit der Hinterachse mit dem eingestellten Lenkwinkel. s bezeichnet zunächst den Längsabstand eines Umfeldpunktes entlang dem Fahrschlauch; dies entspricht der Bogenlänge bei einer durch den Lenkwinkel vorgegeben Krümmung. Vorteilhafterweise wird diese Bogenlänge als Abstand bis zur Kontur festgelegt und entspricht damit dem noch fahrbaren Weg bis zum Erreichen des Umfeldpunktes.

Um eine Kollision mit dem Objekt, mit dem eine Kollision droht, zu vermeiden, wird in Abhängigkeit der Position des Objekts, mit dem die Kollision droht, dem aktuellen Lenkeinschlag und der Kontur der Karosserie des Fahrzeugs der Zeitpunkt für den automatischen Bremseingriff bestimmt. Der Zeitpunkt für den automatischen Bremseingriff wird dabei so ermittelt, dass ein rechtzeitiges Anhalten des Fahrzeugs vor der Kollision möglich ist.

In einer Ausführungsform wird die Unterstützung des Fahrers beim Fahrmanöver abgebrochen, wenn der Fahrer ein Lenkmoment entgegen dem vorgegebenen Lenkeinschlag aufbringt. Hierzu ist es notwendig, dass der Fahrer das Lenkmoment, das auf das Lenkrad aufgeprägt wird, überwindet. Durch das Überwinden des Lenkmomentes wird angezeigt, dass der Fahrer nicht der vom System vorgegebenen Richtung folgen möchte. Dies ist z.B. dann sinnvoll, wenn zwei Möglichkeiten bestehen, ein Objekt, mit dem eine Kollision droht, zu umfahren, wie dies beispielsweise bei Pfosten, auf die das Fahrzeug frontal zufährt, möglich ist. Alternativ ist es auch möglich, dass der Fahrer z.B. frontal auf ein Hindernis zufährt, jedoch vor Erreichen des Hindernisses das Fahrzeug anhalten möchte. Dies können z.B. Pfosten oder auch Mauern oder Wände sein, die eine Parklücke nach vorne begrenzen. In diesem Fall wünscht der Fahrer kein Ausweichmanöver, sondern das Fortsetzen der Geradeausfahrt direkt auf das Objekt zu.

Wenn die Unterstützung des Fahrmanövers für den Fahrer abgebrochen worden ist, z.B. indem der Fahrer ein Lenkmoment entgegen der Empfehlung aufgebracht hat, ist es weiterhin möglich, dass eine erneute Unterstützung des Fahrers erfolgt, wenn nach dem Abbruch der Unterstützung durch den vom Fahrer vorgegebenen Lenkeinschlag eine alternative mögliche Trajektorie zum Umfahren des Objekts erreicht wird. In diesem Fall kann dann die Unterstützung der alternativen Trajektorie zum Umfahren des Objekts, mit dem eine Kollision droht, erfolgen. Erfindungsgemäss werden dem Fahrer des Fahrzeugs Informationen über den automatischen Lenkeingriff und/oder den automatischen Bremseingriff angezeigt. Hierbei kann z.B. bei einem Lenkeingriff die geplante Richtung angezeigt werden. Weiterhin ist es vorteilhaft, wenn dem Fahrer sowohl Informationen über den Eingriff selbst, z.B. Richtung und Stärke des Eingriffs und/oder auch der Grund für den Eingriff angezeigt werden. Die Anzeige kann z.B. durch eine zweidimensionale Darstellung des Umfeldes mit dargestellten Objekten erfolgen. Die Anzeige kann z.B. den Eingriff unterstützen, indem dem Fahrer des Fahrzeugs der Eingriff erklärt wird, oder sogar teilweise den Eingriff ersetzen. Dazu ist es z.B. möglich, den Lenkeingriff nur anzuzeigen und einen Bremseingriff automatisch durchzuführen oder beide Eingriffe nur anzuzeigen. Der Fahrer kann dann der Anzeige folgen, um eine Kollision mit dem Objekt, mit dem die Kollision droht, zu vermeiden.

Kurze Beschreibung der Zeichnungen

Ausführungsbeispiele der Erfindung sind in den Zeichnungen dargestellt und werden in der nachfolgenden Beschreibung näher erläutert.

Es zeigen:

Figur 1    ein Fahrzeug und einen Schutzbereich um das Fahrzeug bei Geradeausfahrt,

Figur 2    ein Fahrzeug und einen Schutzbereich um das Fahrzeug bei Kurvenfahrt,

Figur 3　ein Fahrzeug und Schutzbereiche bei Auftreten eines Hindernisses,

Figur 4　ein Fahrzeug mit Trajektorie zur Vermeidung einer Kollision,

Figur 5　einen Fahrschlauch mit Hindernissen im Fahrschlauch in einer ersten Ausführungsform,

Figur 6　einen Fahrschlauch mit Hindernissen im Fahrschlauch in einer zweiten Ausführungsform,

Figur 7　eine Funktion zur Berechnung des Lenkeingriffs in einer ersten Ausführungsform,

Figur 8　eine Funktion zur Berechnung des Lenkeingriffs in einer zweiten Ausführungsform,

Figur 9　Eingriffsstärke in Abhängigkeit der Funktion gemäß Figur 7.

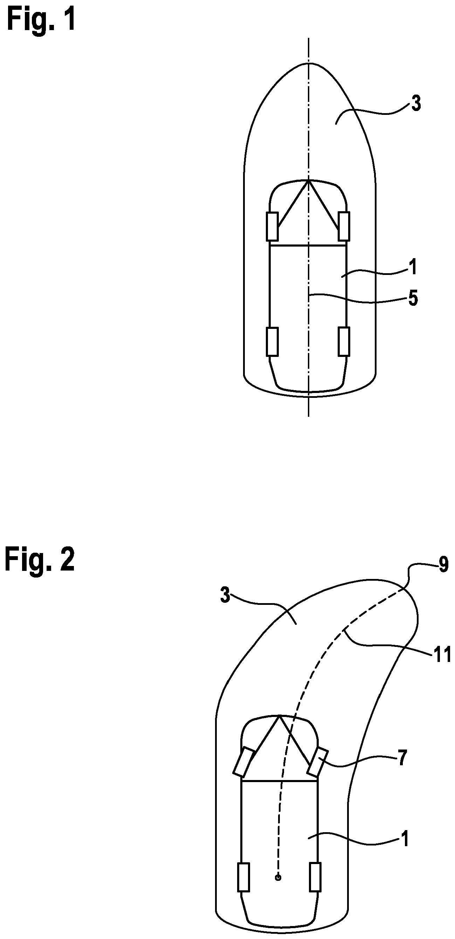

In Figur 1 sind ein Fahrzeug und ein Schutzbereich um das Fahrzeug bei Geradeausfahrt dargestellt.

Um einen Fahrer eines Fahrzeugs 1 bei einem Fahrmanöver dahingehend zu unterstützen, dass Kollisionen mit Objekten in der Umgebung des Fahrzeugs vermieden werden, wird ein Schutzbereich 3 definiert, in dem zur ungehinderten Weiterfahrt des Fahrzeugs 1 keine Objekte, die zu einer Kollision mit dem Fahrzeug führen können, sein dürfen. Derartige Objekte sind z.B. andere Fahrzeuge, Wände, Pfosten oder auch Personen. Auch beliebige andere Objekte, die Hindernisse darstellen können, mit denen das Fahrzeug 1 kollidieren kann, sind zu beachten. Um zu erfassen, ob sich im Schutzbereich 3 Objekte befinden, werden üblicherweise Abstandssensoren eingesetzt. Geeignete Sensoren sind z.B. Ultraschallsensoren, Radarsensoren, LIDAR-Sensoren oder Videosensoren mit Abstandsinformationen. Die Sensortypen können jeweils einzeln oder auch in Kombination eingesetzt werden. Zur Erfassung der Umgebung des Fahrzeugs 1 werden üblicherweise im Frontbereich und im Heckbereich Sensoren eingesetzt. Zusätzlich ist es möglich, auch seitlich am Fahrzeug Sensoren anzubringen, um den Bereich seitlich neben dem Fahrzeug zu erfassen. Besonders geeignet als Abstandssensoren sind konturgebende Sensoren mit hochauflösenden Richtungsinformation. Dies sind z.B. LIDAR-Sensoren oder Videosensoren mit Abstandsinformationen.

Bei Geradeausfahrt ist der Schutzbereich 3 symmetrisch zur Achse 5 des Fahrzeugs, wie in Figur 1 dargestellt. Solange kein Objekt in den Schutzbereich 3 gerät, das von den Sensoren des Fahrzeugs 1 erfasst wird, ist eine ungehinderte Geradeausfahrt möglich und es ist kein Eingriff notwendig, um den Fahrer bei seinem Fahrmanöver zu unterstützen.

Da bei einer höheren Geschwindigkeit Ausweichmanöver früher eingeleitet werden müssen und auch der Bremsweg länger ist, ist es vorteilhaft, wenn der Schutzbereich 3 geschwindigkeitsabhängig definiert wird. So ist es z.B. möglich, mit abnehmender Geschwindigkeit des Fahrzeugs 1 den Schutzbereich 3 kleiner zu gestalten.

In Figur 2 ist ein Fahrzeug mit Schutzbereich um das Fahrzeug bei Kurvenfahrt dargestellt.

Anders als bei einer Geradeausfahrt des Fahrzeugs 1 muss bei einer Kurvenfahrt insbesondere auch der Bereich in Abbiegerichtung vor dem Fahrzeug frei von Hindernissen sein. Um dies zu gewährleisten, ist es z.B. möglich, den Schutzbereich 3 in Abhängigkeit vom Lenkeinschlag zu verformen. Dies ist beispielhaft für einen Rechtsabbiegevorgang in Figur 2 dargestellt. Bei einem Einschlag der Vorderräder 7 nach rechts wird insbesondere der Bereich rechts vor dem Fahrzeug vom Schutzbereich 3 abgedeckt. Hierzu ist es z.B. wie in Figur 2 dargestellt möglich, den Schutzbereich 3 so zu "verbiegen", dass die Spitze 9 des Schutzbereiches, die am weitesten vom Fahrzeug 1 entfernt ist, auf der geplanten Trajektorie 11 für die Kurvenfahrt liegt. Bei einer Änderung des Lenkeinschlages und damit des Winkels der Vorderräder 7 ändert sich entsprechend auch die Form des Schutzbereiches 3. Bei einem Linksabbiegevorgang verläuft die Änderung der Form des Schutzbereiches 3 spiegelsymmetrisch zu der in Figur 2 dargestellten Ausführungsform.

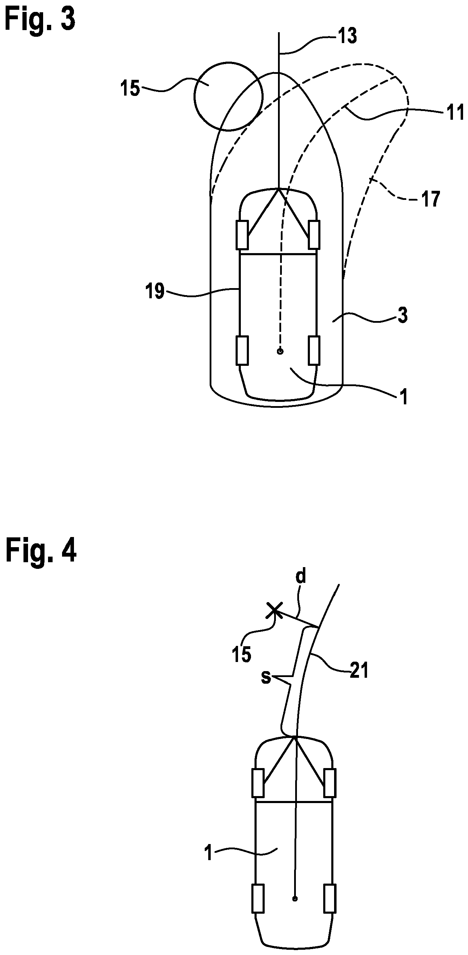

In Figur 3 sind ein Fahrzeug und Schutzbereiche bei Auftreten eines Hindernisses dargestellt.

Figur 3 lässt sich ein Fahrzeug 1 und der Schutzbereich 3 des Fahrzeugs für Geradeausfahrt entnehmen. Die Geradeausfahrt ist dabei mit einer Trajektorie 13 dargestellt. In den Schutzbereich 3, der von Objekten für eine ungehinderte Geradeausfahrt freigehalten werden soll, ragt gemäß der Darstellung in Figur 3 ein Objekt 15. Das Objekt 15 ist hier schematisch kreisförmig dargestellt und kann z.B. eine Person, ein Blumenkübel oder ein beliebiges anderes Objekt sein. Bei einem unbewegten Objekt 15 führt eine Fortsetzung der Geradeausfahrt des Fahrzeugs 1 zu einer Kollision mit dem Objekt 15. Eine solche Kollision soll durch das erfindungsgemäße Verfahren verhindert werden. Wenn der Fahrer nicht rechtzeitig ein Ausweichmanöver einleitet, wird vom Fahrzeug 1 ein automatischer Lenkeingriff durchgeführt. Die Strecke, die durch den automatischen Lenkeingriff zurückgelegt wird, entspricht der Trajektorie 11 für Kurvenfahrt. Die Trajektorie 11 wird dabei so berechnet, dass der sich bei der Trajektorie 11 ergebende Schutzbereich 17 so geformt ist, dass das Objekt 15 nicht in den Schutzbereich 17 hineinragt.

Neben dem Lenken des Fahrzeugs 1 kann es hierzu auch erforderlich sein, z.B. die Geschwindigkeit zu reduzieren oder das Fahrzeug vollkommen abzubremsen, wenn auch bei einem Abbiegen des Fahrzeugs 1, wie es in Figur 3 dargestellt ist, eine Kollision nicht vermieden werden kann. Um insbesondere bei Langsamfahrt, d.h. bei Geschwindigkeiten < 10 Stundenkilometern, eine möglichst dichte Vorbeifahrt am Objekt 15 zu ermöglichen, wird die Kontur 19 des Fahrzeugs bei der Berechnung des Schutzbereichs 3 berücksichtigt. Anders als bei bekannten Systemen, bei denen das Fahrzeug 1 üblicherweise in Form eines Rechtecks abgebildet wird, wird durch die Berücksichtigung der Kontur 19 des Fahrzeugs insbesondere in den Eckbereichen des Fahrzeugs ein deutlich näheres Heranfahren an das Objekt 15 ermöglicht, wie dies im Allgemeinen auch vom Fahrer des Fahrzeugs 1 durchgeführt wird. Durch die Berücksichtigung der Kontur 19 des Fahrzeugs 1 bei der Bestimmung des Schutzbereichs 3 lässt sich so z.B. die Akzeptanz des Systems durch den Fahrer des Fahrzeugs 1 erhöhen. Zudem ist aufgrund der Möglichkeit der sehr viel dichteren Vorbeifahrt an einem Objekt 15 vielfach noch ein Ausweichen mit Hilfe des Fahrassistenzsystems, das das erfindungsgemäße Verfahren umsetzt, möglich, wo bei einem System gemäß dem Stand der Technik eine Weiterfahrt mit Unterstützung des Fahrassistenzsystems unmöglich scheint, da aufgrund der Modellierung des Fahrzeugs in Form eines Rechtecks keine Vorbeifahrt an dem Objekt 15 mehr möglich zu sein scheint.

Wenn bei dem erfindungsgemäßen Verfahren, wie in Figur 3 dargestellt, ein Objekt 15 in den Schutzbereich 3 des Fahrzeugs 1 hineinragt, erfolgt ein Eingriff durch das Fahrassistenzsystem, das das erfindungsgemäße Verfahren umsetzt. Wenn ein Ausweichen nur durch einen Lenkeingriff möglich ist, wird nur der Lenkeingriff durchgeführt. Wenn ein Umfahren des Objekts 15 bei einer geringeren Geschwindigkeit möglich ist, wird weiterhin die Geschwindigkeit des Fahrzeugs reduziert. Nur in dem Fall, in dem ein Ausweichen nicht mehr möglich ist, wird das Fahrzeug 1 bis zum Stillstand abgebremst.

Neben der Unterstützung des Fahrers des Fahrzeugs 1 bei einem Einparkvorgang kann das erfindungsgemäße Verfahren auch bei beliebigen anderen Manövern eingesetzt werden. So kann das Verfahren zum Beispiel auch dazu dienen, Kollisionen mit Objekten bei Langsamfahrt z.B. in Sackgassen, der Einfahrt in Parklücken oder Garagen, oder auch beim Abbiegen zu vermeiden.

Das zur Durchführung des Verfahrens eingesetzte Fahrassistenzsystem kann automatisch bei langsamer Fahrt aktiviert werden oder vom Fahrer manuell eingeschaltet werden. Wenn ein manuelles Anschalten möglich ist, so kann dies über eine beliebige Eingabevorrichtung, wie sie in Fahrzeugen vorgesehen ist, beispielsweise einen Schalter, einen Multifunktionstaster oder einen berührungsempfindlichen Bildschirm, erfolgen.

Um Missbrauch und unklare Übergabeszenarien zu vermeiden, ist es vorteilhaft, die Geschwindigkeit, bei der das erfindungsgemäße Verfahren durchgeführt wird, auf eine geringe Maximalgeschwindigkeit, beispielsweise 30 Stundenkilometer, zu beschränken. Unklare Übergangsszenarien können z.B. entstehen, wenn der Fahrer eine Geschwindigkeitsgrenze überschreitet, bei der das System z.B. aufgrund von Sensorreichweiten oder Verarbeitungslatenzen die Kollisionsfreiheit nicht mehr garantieren kann.

Wenn das erfindungsgemäße Verfahren durch das Fahrassistenzsystem zum Einsatz kommt, ist es vorteilhaft, dass auf das Lenkrad des Fahrzeugs ein Moment aufgebracht wird. Hierdurch erhält der Fahrer eine Information, dass das System eingreift. Weiterhin besteht jedoch auch die Möglichkeit, dass vom Fahrer ein Lenkmoment entgegen der Systemempfehlung aufgebracht wird. Hierzu ist es notwendig, dass das vom Fahrer aufgebrachte Lenkmoment größer ist als ein definierter Schwellwert. Wenn dies der Fall ist, wird das vom Fahrer aufgebrachte Lenkmoment als Überstimmungswunsch gewertet und das System zur Durchführung des erfindungsgemäßen Verfahrens wird deaktiviert. Alternativ kann das System jedoch auch weiterhin aktiv sein. Wenn der Fahrer z.B. bei der in Figur 3 dargestellten Ausführungsform das Lenkrad nach links dreht, kann das Objekt 15 z.B. ab Erreichen eines bestimmten Winkels auch auf der linken Seite passiert werden. Der Fahrer lenkt somit zunächst gegen eine Kraft, durch die die ursprüngliche Planung überstimmt wird, ab Erreichen eines Lenkwinkels, bei dem ein Umfahren des Objektes 15 auf der anderen Seite möglich ist, erfolgt jedoch wieder die Unterstützung durch das erfindungsgemäße Verfahren. Erfindungsgemäss werden dem Fahrer Informationen über den Eingriff durch das Fahrassistenzsystem angezeigt wird, so dass dieser z.B. über den Eingriff selbst, beispielsweise hinsichtlich Richtung und Stärke des Eingriffs, informiert wird. Weiterhin ist es auch möglich, dem Fahrer den Grund für den Eingriff anzugeben. Dies kann z.B. durch eine Visualisierung des Umfeldes mit eingetragenen Hindernissen erfolgen. Die Visualisierung kann dabei zweidimensional oder dreidimensional auf einer geeigneten Anzeigevorrichtung des Fahrzeugs erfolgen. Hierbei ist es z.B. möglich, eine zweidimensionale Visualisierung vorzusehen, die ähnlich aufgebaut ist wie bei aus dem Stand der Technik bekannten Ultraschall-basierten Kollisionswarnsystemen mit Anzeige in einem Display. Die Anzeige kann dem Fahrer des Fahrzeugs 1 dabei den Eingriff erklären oder möglicherweise auch den Eingriff ersetzen. Hier ist es z.B. möglich, einen Lenkeingriff nur anzuzeigen und den Bremseingriff automatisch durchzuführen oder beide Eingriffe nur anzuzeigen. In diesem Fall kann der Fahrer dann den Anzeigen durch eigene Aktion folgen.

Eine weitere Möglichkeit einen notwendigen Lenkeingriff und/oder Bremseingriff zu bestimmen, um eine Kollision mit dem Objekt 15 zu vermeiden, ist z.B. den Schutzbereich als Potenzialfeld für Lenkeingriff und Bremseingriff darzustellen und eine Überlappung aus Fahrzeugbereich und Objekten zu berechnen. Hierzu sei das Potenzialfeld für den Bremseingriff $P_B(v, \kappa)$ und das Potenzialfeld für den Lenkeingriff $P_L(v, \kappa)$ mit der aktuellen Längsgeschwindigkeit $v$ und dem aktuellen Lenkwin-

kel $\kappa$. Das Lenkmoment I und die Bremsverzögerung b werden an jedem Punkt i = 1...n der Quantisierung des Fahrzeugumfelds durch Differenzierung bestimmt:

$$b_i \sim \frac{\partial P_B(v, \kappa)}{\partial v} \qquad l_i \sim \frac{\partial P_L(v, \kappa)}{\partial \kappa}$$

Damit wird von jedem von einem Hindernis belegten Punkt im Fahrzeugumfeld ein Eingriff in Längs- bzw. Querrichtung vorgegeben. Der resultierende Gesamtbremseingriff B bzw. Gesamtlenkeingriff L wird aus allen Hindernispunkten im Fahrzeugumfeld folgendermaßen bestimmt:

$$B = \max(b_i)$$

und

$$L = \max\left(l_i\big|_{l_i > 0}\right) - \max\left(\left|l_i\right|\big|_{l_i < 0}\right)$$

Für den Bremseingriff B wird somit der Hindernispunkt ausgewertet, der den stärksten Eingriff verlangt, für den Lenkeingriff wird die Differenz der beiden Eingriffe ausgewertet, die jeweils den stärksten Eingriff nach links bzw. nach rechts fordern.

Um ein sinnvoll ausgestaltetes Potenzialfeld für den Bremseingriff zu erhalten, ist es z.B. möglich, die notwendige Bremsverzögerung a zur Vermeidung einer Kollision mit einem Objekt aus der Relativgeschwindigkeit v und dem Abstand s entlang einer prädizierten Trajektorie 21 zu bestimmen. Die prädizierte Trajektorie 21 ist dabei die Trajektorie, die vom Fahrzeug bei aktuellem Lenkeinschlag befahren wird.

Nachfolgend wird zur Vereinfachung von einem stehenden Hindernis ausgegangen. Die Bremsverzögerung stellt den vom Fahrassistenzsystem vorgenommenen Eingriff dar und soll sich aus der partiellen Ableitung des Potenzialfelds ergeben.

Für die Bremsverzögerung gilt:

$$a = \frac{v^2}{2 \cdot s} \stackrel{!}{=} \frac{\partial P_B(v, \kappa)}{\partial v}.$$

Damit kann für das Potenzialfeld $P_B$ für den Bremseingriff folgende Abhängigkeit angegeben werden:

$$P_B(s) = \frac{1}{6s} \cdot v^3 \cdot F(d, s),$$

wobei s den Abstand des Hindernisses entlang der prädizierten Trajektorie 21 und d den senkrechten Abstand des Objekts 15 zur prädizierten Trajektorie 21 darstellen. Dies ist in Figur 4 dargestellt.

Algorithmen zur Berechnung der Eingriffe und Eingriffsstärke können in einem Koordinatensystem abhängig von den Größen d und s dargestellt werden.

In der vorstehend beschriebenen Ausführungsform existieren für den Lenkeingriff und den Bremseingriff verschieden geformte Schutzbereiche (bzw. Potenzialfelder). Auf diese Weise ist es möglich, den unterschiedlichen Charakteristiken von Lenkeingriff und Bremseingriff Rechnung zu tragen. Die Form des Schutzbereichs für den Lenkeingriff ist zumindest abhängig vom momentanen Lenkwinkel und gegebenenfalls zusätzlich von der Geschwindigkeit und Beschleunigung des Fahrzeugs 1. Der Schutzbereich zur Bestimmung des Bremseingriffs ist primär abhängig von der Geschwindigkeit des Fahrzeugs, kann jedoch weiterhin auch abhängig sein vom Lenkwinkel.

In einer Ausführungsform ist es auch möglich, Lenkeingriff und Bremseingriff aus demselben Potenzialfeld zu bestimmen.

In einer weiteren Ausführungsform wird der Lenkeingriff nicht über ein zusätzlich aufgebrachtes Lenkmoment erwirkt, sondern mittels einer Lenkwinkelüberlagerung autonom gestellt. Für den Fahrer ergibt sich hierdurch ein völlig anderes Fahrgefühl: Er "schwimmt" mit dem Fahrzeug zwischen den Hindernissen hindurch und gibt nur noch grob die Richtung vor. Eine Überstimmung des Systems kann hier z.B. durch Ausschalten des Fahrassistenzsystems oder auch beispielsweise durch ein sehr starkes Einlenken oder einen entsprechenden Eingriff in die Längsführung, beispielsweise durch Betätigung von Fahrpedal oder Bremspedal, erfolgen.

Neben der Vorwärtsfahrt, wie sie hier dargestellt ist, kann das erfindungsgemäße Verfahren auch für eine Rückwärtsfahrt eingesetzt werden. Hierbei ist es vorteilhaft, wenn bei Einlegen des Rückwärtsganges der Schutzbereich so umgedreht wird, dass der in den Figuren 1 bis 3 erkennbare Keil nach hinten zeigt und so eine kollisionsfreie Rückwärtsfahrt möglich ist. Hierbei wird die Rückwärtsfahrt analog der vorstehend beschriebenen Vorwärtsfahrt durchgeführt. Um eine solche Rückwärtsfahrt durchführen zu können, ist eine entsprechende Hecksensorik, d.h. Abstandssensoren, die im Heckbereich des Fahrzeugs angeordnet sind, notwendig.

Die Schutzbereiche für Lenkeingriff und Bremseingriff können zusätzlich nach subjektiven Kriterien gestaltet werden. So ist es z.B. möglich, durch zusätzliche Überlagerung eines beispielsweise asymmetrischen Feldes zur Modellierung menschlicher Vorlieben physikalisch korrekte, aber unangenehme Manöver zu vermeiden oder andere zu bevorzugen. Ein solches Feld kann z.B. sinnvoll modellieren, dass ein Fahrer üblicherweise Vorbeifahrten an Hindernissen auf der Fahrerseite wesentlich enger beherrscht als auf der Beifahrerseite.

Dies verhält sich ähnlich bei Kurvenfahrten in Manövriersituationen. Auf diese Weise ist es möglich, dass vom Fahrassistenzsystem, das das erfindungsgemäße Verfahren durchführt, Situationen umgangen werden, die der Fahrer selbst auch vermeiden würde. Wenn diese jedoch z.B. zur Vermeidung einer Kollision unumgänglich sind, werden sie dennoch vom Fahrassistenzsystem beherrscht.

In einer alternativen Ausführungsform ist es auch möglich, den notwendigen Lenkeingriff und/oder Bremseingriff zu berechnen, ohne ein Potenzialfeld abzuleiten. Dies kann beispielsweise folgendermaßen realisiert werden. So lässt sich für die Bremsfunktionalität folgender Zusammenhang wählen:

$$a = \frac{v^2}{2s} \cdot F(d,s),$$

wobei die Funktion F(d,s) bestimmt, in welchen Situationen und mit welcher Stärke ein Eingriff erfolgt.

Für einen Lenkeingriff lässt sich in dieser Ausführungsform beispielsweise folgender Ansatz wählen:

$$\lambda = ET \cdot F(d,s)$$

$$\Delta \kappa = \frac{2\lambda}{2s^2}.$$

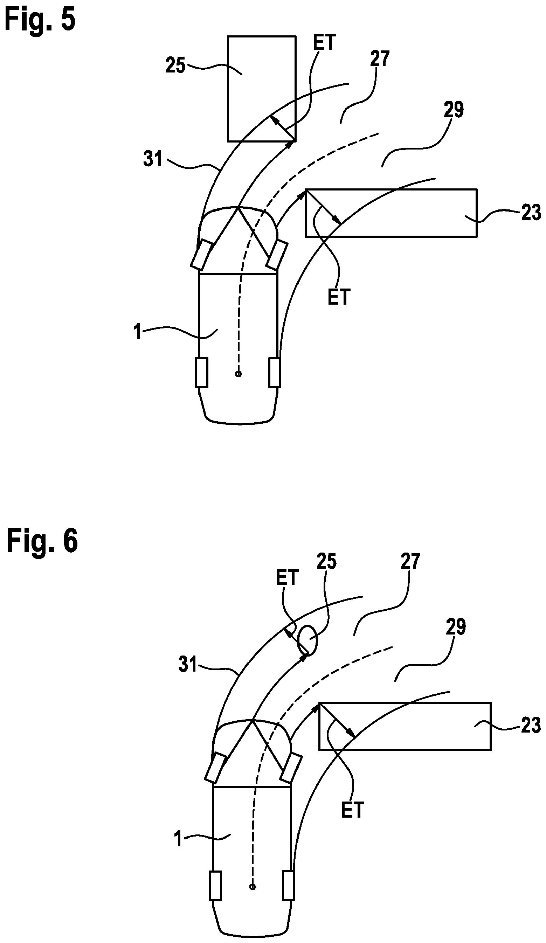

Ziel ist es, eine gewünschte Lenkwinkeländerung $\Delta \kappa$ zu bestimmen. Hierzu wird die Eindringtiefe ET eines Objekts aus Objektumfelddaten und anhand des aus dem aktuellen Lenkwinkel prädizierten Fahrschlauchs ermittelt. Der Fahrschlauch ist dabei der Bereich, der vom Fahrzeug beim Überfahren abgedeckt wird. Um eine der Situation angepasste Unterstützung für den Fahrer des Fahrzeugs 1 durchzuführen, kann der Fahrschlauch mit einer Funktion F(d,s) gewichtet werden. Beispielhaft ist dies in den Figuren 5 und 6 dargestellt. Zur Ermittlung von notwendigen Lenkeingriffen bzw. Bremseingriffen, wird für jeden Zeitschritt in einem ersten Schritt die Eindringtiefe von Objekten 23, 25 für die linke Hälfte 27 und die rechte Hälfte 29 des Fahrschlauchs 31 ermittelt. In einem nächsten Schritt wird die notwendige bzw. gewünschte Lenkwinkeländerung $\Delta \kappa$ bzw. das sich hieraus ergebende Lenkmoment berechnet. Dies kann z.B. als linear abhängig gewählt werden. In einem dritten Schritt werden die Eingriffsmaxima für die linke Seite und die rechte Seite des Fahrschlauchs 31 bestimmt. In einem abschließenden Schritt werden die linken und rechten Maxima zum eigentlichen Lenkwinkel bzw. Lenkmoment summiert.

Die Eindringtiefe ET für zwei Objekte 23, 25, wobei die Objekte 23, 25 jedenfalls nur teilweise in den Fahrschlauch 31 hineinragen, ist in Figur 5 gezeigt, im Unterschied dazu ist in Figur 6 das Objekt 25 vollständig im Fahrschlauch 31. Die Eindringtiefe ET ist in diesem Fall ausgehend bestimmt von dem Punkt des vollständig im Fahrschlauch 31 liegenden Objekts 25, der vom Rand des Fahrschlauchs am weitesten entfernt ist.

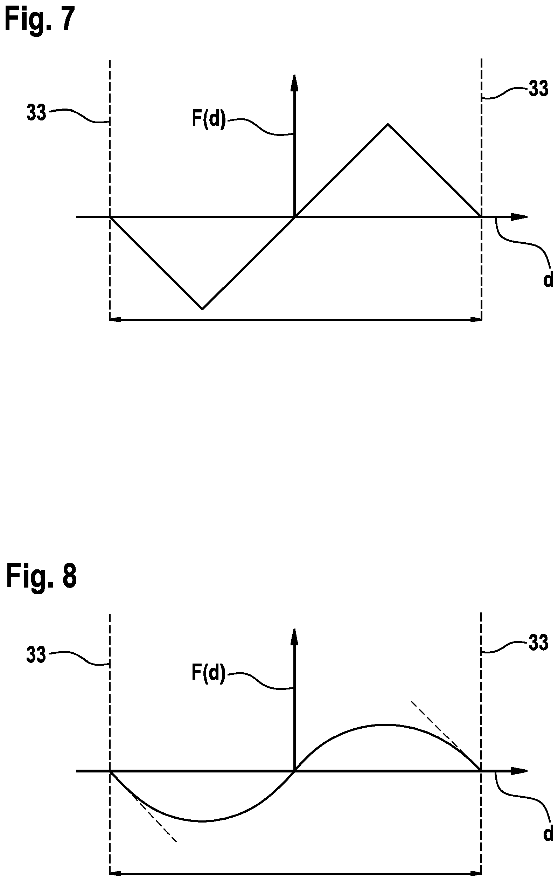

In einer weiteren Ausführungsform ist es auch möglich, zur Berechnung des Lenkeingriffs anstelle der Eindringtiefe ET den Wert einer Funktion F(d) zu verwenden. Diese Funktion ist vorzugsweise symmetrisch zur Fahrschlauchmitte. Eine entsprechende Funktion ist in einer ersten Ausführungsform in Figur 7 und in einer zweiten Ausführungsform in Figur 8 dargestellt. Hierbei ist auf der x-Achse der Abstand eines Objekts d aufgetragen und auf der y-Achse der Funktionswert F(d) aufgetragen. Mit gestrichelten Linien sind die Grenzen 33 des Fahrschlauchs 31 dargestellt. Charakteristisch für die Funktion F(d) können z.B. folgende Eigenschaften sein:

- F(d) = 0 für $|d|$ > Fahrschlauchbreite/2
- F(d) ist stetig
- F(Fahrschlauchbreite/2) = 0
- An den Rändern des Fahrschlauchs kann der Zusammenhang F(d) ~ (Fahrschlauchbreite/2-d) gelten
- Die Funktion F(d) kann in einer weiteren Ausführungsform über den prädizierten Rand des Fahrschlauchs hinaus erweitert werden, um zusätzlich zur Kollisionsfreiheit einen Sicherheitsabstand zu gewährleisten. Dieser kann z.B. auch abhängig von der Fahrzeuggeschwindigkeit gewählt werden.

Um die Eingriffsstärke zu berechnen, ist es möglich, über die linke und die rechte Hälfte des Fahrschlauchs 31 zunächst getrennt jeweils den maximalen Eingriff über das gesamte Schutzfeld gemäß

$$l = \frac{F(d)}{s^2}$$

zu bestimmen. Hierbei stellt unter der Voraussetzung, dass Hindernisse durch Messpunkte im Erfassungsbereich repräsentiert sind, d immer den Abstand des Messpunkts auf dem Hindernis zum jeweils näheren Fahrschlauchrand dar. In anderen Fällen kann analog beispielsweise mit Samplingverfahren vorgegangen werden. Für jeden Hindernismesspunkt i = 1...n im Fahrschlauch wird die notwendige Eingriffsstärke $l_i$ berechnet. Die maximalen Eingriffsstärken $l_{max,l}$ und $l_{max,r}$ in der linken und rechten Fahrschlauchhälfte werden jeweils mit unterschiedlichen Vorzeichen zur resultierenden Eingriffsstärke $l_{res}$ addiert.

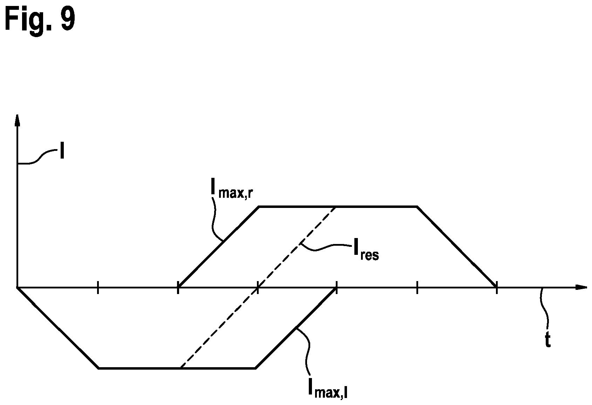

Für ein rechteckiges Objekt ergeben sich mit diesem Verfahren z.B. die in Figur 9 gezeigten Eingriffsstärken für die linke und rechte Fahrschlauchhälfte $l_l$ und $l_r$ sowie für den resultierenden Gesamteingriff $l_{res}$. Zugrunde gelegt wurde ein rechteckiges Hindernis von halber Fahrschlauchbreite, das sich von links nach rechts über den Fahrschlauch bewegt sowie die Eingriffsfunktion gemäß Figur 7.

In Figur 9 ist auf der x-Achse die Zeit t und auf der y-Achse die Eingriffsstärke I dargestellt.

Vorteilhafterweise ist das Verfahren nicht auf Szenarien mit Einzelhindernissen beschränkt, da keine Information über den Zusammenhang von Messpunkt zu Objekt verwendet wird. Eine Kontur der Objekte ist deshalb nicht Voraussetzung zur Durchführung des Verfahrens, kann aber durchaus in einer weiteren Ausführungsform als Hindernisinformation verwendet werden.

In einer weiteren Ausführungsform werden die linke und die rechte Fahrschlauchhälfte 27, 29 auf zwei parallele Streifen im Fahrschlauch begrenzt, beispielsweise entlang der prädizierten Reifenabrollbahn. Für die Berechnung der Eingriffsstärke werden nur Hindernisse betrachtet, deren Eindringtiefe in diese Streifen größer als 0 ist.

**Patentansprüche**

1. Verfahren zur Unterstützung eines Fahrers eines Fahrzeugs (1) bei einem Fahrmanöver, bei dem zumindest die Umgebung des Fahrzeugs (1) in Fahrtrichtung vor dem Fahrzeug (1) erfasst wird, um Objekte (15, 23, 25) zu erfassen, mit denen das Fahrzeug (1) unter Beibehaltung der Fahrtrichtung kollidieren würde, wobei bei einer drohenden Kollision mit einem Objekt (15, 23, 25) ein automatischer Lenkeingriff und/oder ein automatischer Bremseingriff erfolgt, um eine Kollision mit dem Objekt (15, 23, 25) zu vermeiden, wobei zur Ermittlung, ob eine Kollision mit einem Objekt (15, 23, 25) droht, die Kontur (19) der Karosserie des Fahrzeugs (1) berücksichtigt wird, **dadurch gekennzeichnet, dass** dem Fahrer des Fahrzeugs (1) Informationen über den automatischen Lenkeingriff und/oder den automatischen Bremseingriff angezeigt werden.

2. Verfahren gemäß Anspruch 1, **dadurch gekennzeichnet, dass** die Geschwindigkeit, bei der das Fahrmanöver durchgeführt wird, kleiner als 30 km/h ist.

3. Verfahren gemäß Anspruch 1 oder 2, **dadurch gekennzeichnet, dass** zur Erfassung der Umgebung des Fahrzeugs (1) Abstandssensoren, insbesondere Ultraschallsensoren, Radarsensoren oder LIDAR-Sensoren, eingesetzt werden.

4. Verfahren gemäß einem der Ansprüche 1 bis 3, **dadurch gekennzeichnet, dass** ein automatischer Bremseingriff und/oder eine Empfehlung für einen Bremseingriff nur erfolgt, wenn eine Kollision durch den automatischen Lenkeingriff und/oder empfohlenen Lenkeingriff nicht vermieden werden kann.

5. Verfahren gemäß einem der Ansprüche 1 bis 4, **dadurch gekennzeichnet, dass** in Abhängigkeit von Lenkeinschlag, Geschwindigkeit des Fahrzeugs (1), Kontur der Karosserie des Fahrzeugs (1) und Position eines Objekts (15, 23, 25), mit dem eine Kollision droht, ein Ausweichpfad berechnet wird.

6. Verfahren gemäß Anspruch 5, **dadurch gekennzeichnet, dass** in Abhängigkeit vom Abstand des Fahrzeugs (1) zu dem Objekt (15, 23, 25) und der Geschwindigkeit des Fahrzeugs (1) ein Lenkmoment gebildet wird, um dem Fahrer einen zur Vermeidung einer Kollision mit dem Objekt (15, 23, 25) notwendigen Lenkeinschlag anzuzeigen.

7. Verfahren gemäß einem der Ansprüche 4 bis 6, **dadurch gekennzeichnet, dass** aus der Position des Objekts (15, 23, 25), mit dem eine Kollision droht, dem aktuellen Lenkeinschlag und der Kontur (19) der Karosserie des Fahrzeugs (1) der Zeitpunkt für den automatischen Bremseingriff bestimmt wird.

8. Verfahren gemäß einem der Ansprüche 1 bis 7, **dadurch gekennzeichnet, dass** die Unterstützung abgebrochen wird, wenn der Fahrer ein Lenkmoment entgegen dem vorgegebenen Lenkeinschlag aufbringt.

9. Verfahren gemäß Anspruch 8, **dadurch gekennzeichnet, dass** eine erneute Unterstützung des Fahrers erfolgt, wenn nach dem Abbruch der Unterstützung eine alternative mögliche Trajektorie zum Umfahren des Objekts erreicht wird.

**Claims**

1. Method for assisting a driver of a vehicle (1) during a driving manoeuver, in which at least the surroundings of the vehicle (1) in front of the vehicle (1) in the direction of travel are detected, in order to detect objects (15, 23, 25) with which the vehicle (1) would collide when maintaining the direction of travel, wherein in the case of an imminent collision with an object (15, 23, 25) an automatic steering intervention and/or an automatic braking intervention takes place in order to avoid a collision with the object (15, 23, 25), wherein in order to determine whether a collision with an object (15, 23, 25) is imminent, the contour (19) of the bodywork of the vehicle (1) is taken into account, **characterized in that** information about the automatic steering intervention and/or the automatic braking intervention is displayed to the driver of the vehicle (1).

2. Method according to Claim 1, **characterized in that** the speed at which the driving manoeuver is carried out is less than 30 km/h.

**3.** Method according to Claim 1 or 2, **characterized in that** distance sensors, in particular ultrasound sensors, radar sensors or LIDAR sensors, are used to detect the surroundings of the vehicle (1).

**4.** Method according to one of Claims 1 to 3, **characterized in that** an automatic braking intervention and/or a recommendation for a braking intervention is implemented only if a collision cannot be avoided by the automatic steering intervention and/or recommended steering intervention.

**5.** Method according to one of Claims 1 to 4, **characterized in that** an avoidance path is calculated as a function of steering lock, speed of the vehicle (1), contour of the bodywork of the vehicle (1) and position of an object (15, 23, 25) with which there is a risk of a collision.

**6.** Method according to Claim 5, **characterized in that** a steering torque is formed as a function of the distance of the vehicle (1) from the object (15, 23, 25) and the speed of the vehicle (1), in order to indicate to the driver a steering lock which is necessary to avoid a collision with the object (15, 23, 25).

**7.** Method according to one of Claims 4 to 6, **characterized in that** the time for the automatic braking intervention is determined from the position of the object (15, 23, 25) with which there is a risk of a collision, the current steering lock and the contour (19) of the bodywork of the vehicle (1).

**8.** Method according to one of Claims 1 to 7, **characterized in that** the assistance is aborted if the driver applies a steering torque counter to the predefined steering lock.

**9.** Method according to Claim 8, **characterized in that** renewed assistance of the driver occurs if an alternative possible trajectory for avoiding the object is obtained after the aborting of the assistance.

**Revendications**

**1.** Procédé pour assister un conducteur d'un véhicule (1) lors d'une manoeuvre de conduite, dans lequel au moins l'environnement du véhicule (1) à l'avant du véhicule (1) dans le sens du déplacement est détecté afin de détecter des objets (15, 23, 25) avec lesquels le véhicule (1) pourrait entrer en collision en maintenant le sens du déplacement, une intervention de changement de direction automatique et/ou une intervention de freinage automatique ayant lieu en cas de collision imminente avec un objet (15, 23, 25) afin d'éviter une collision avec l'objet (15, 23, 25), le contour (19) de la carrosserie du véhicule (1) étant pris en compte pour déterminer si une collision avec un objet (15, 23, 25) est imminente, **caractérisé en ce que** des informations à propos de l'intervention de changement de direction automatique et/ou de l'intervention de freinage automatique sont affichées à l'attention du conducteur du véhicule (1).

**2.** Procédé selon la revendication 1, **caractérisé en ce que** la vitesse à laquelle est effectuée la manoeuvre de conduite est inférieure à 30 km/h.

**3.** Procédé selon la revendication 1 ou 2, **caractérisé en ce que** des capteurs de distance, notamment des capteurs à ultrasons, des capteurs radar ou des capteurs LIDAR sont utilisés pour la détection de l'environnement du véhicule (1).

**4.** Procédé selon l'une des revendications 1 à 3, **caractérisé en ce qu'**une intervention de freinage automatique et/ou une recommandation pour une intervention de freinage n'a lieu que lorsqu'une collision ne peut pas être évitée par l'intervention de changement de direction automatique et/ou l'intervention de changement de direction recommandée.

**5.** Procédé selon l'une des revendications 1 à 4, **caractérisé en ce qu'**une trajectoire d'évitement est calculée en fonction du braquage de direction, de la vitesse du véhicule (1), du contour de la carrosserie du véhicule (1) et de la position d'un objet (15, 23, 25) avec lequel une collision est imminente.

**6.** Procédé selon la revendication 5, **caractérisé en ce qu'**un couple de direction est formé en fonction de la distance entre le véhicule (1) et l'objet (15, 23, 25) et de la vitesse du véhicule (1) en vue d'indiquer au conducteur un braquage de direction nécessaire pour éviter une collision avec l'objet (15, 23, 25).

**7.** Procédé selon l'une des revendications 4 à 6, **caractérisé en ce que** l'instant pour l'intervention de freinage automatique est déterminé à partir de la position de l'objet (15, 23, 25) avec lequel une collision est imminente, le braquage de direction actuel et le contour (19) de la carrosserie du véhicule (1).

**8.** Procédé selon l'une des revendications 1 à 7, **caractérisé en ce que** l'assistance est interrompue lorsque le conducteur applique un couple de direction à l'opposé du braquage de direction prédéfini.

**9.** Procédé selon la revendication 8, **caractérisé en ce qu'**une nouvelle assistance au conducteur a lieu quand, après avoir interrompu l'assistance, une trajectoire alternative possible pour contourner l'objet est atteinte.

# Fig. 1

# Fig. 2

**Fig. 3**

**Fig. 4**

EP 2 536 615 B1

**Fig. 5**

**Fig. 6**

**Fig. 7**

33

F(d)

33

d

**Fig. 8**

33

F(d)

33

d

# Fig. 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10331235 A
- EP 1864881 A1
- DE 102006057842 A